# FASCICULE DE BREVET EUROPEEN

(11) **EP 0 410 916 B1**
(45) Date de publication et mention de la délivrance du brevet: **02.02.1994**
(21) Numéro de dépôt: 90440068.6
(22) Date de dépôt: 25.07.1990
(51) Int. Cl.: B65G 65/40

(54) **Dispositif d'extraction longitudinale pour trémies en longueur ou en file, en particulier pour trémies de cokeries**
Längsabzugeinrichtung für langgestreckte oder aneinandergereihte Bunker, insbesondere für Kokereibunker
Longitudinal discharging device for long or lined up bins, especially for coking bins

(30) Priorité: 27.07.1989 FR 8910334
(43) Date de publication de la demande: 30.01.1991
(73) Titulaire: G T A, Sàrl, F-57600 FORBACH (FR)
(72) Inventeur: Greff, Alain, F-57460 Behren-les-Forbach (FR)
(74) Mandataire: Nuss, Pierre

(56) Documents cités:
- DE-A- 2 223 109
- DE-C- 517 888
- FR-A- 1 263 181
- FR-A- 1 276 355

## Description

La présente invention concerne le domaine de la construction de dispositifs d'extraction, en particulier pour trémies de cokerie, mais également pour des trémies en file, par exemple de silos ou de conteneurs mobiles alongés, destinés à l'évacuation de matières en vrac, et a pour objet un dispositif d'extraction longitudinale destiné à cet effet.

Les trémies en longueur de cokerie sont destinées à la réception du coke, déversé au moyen de wagonnets et présentant encore des particules incandescentes, avant dégagement, en vue du stockage ou de l'expédition, au moyen d'une bande transporteuse. Ce coke est déversé dans les trémies sur une épaisseur conséquente et s'appuie partiellement, au bout des trémies, contre un mur réglable en position par rapport à la bande transporteuse d'évacuation et délimitant avec le fond des trémies, un espace destiné au passage d'un dispositif d'extraction.

Actuellement, l'extraction est généralement effectuée, soit au moyen d'un dispositif à fraise, soit au moyen d'un dispositif de dégagement par translation.

Les dispositifs à fraise existants sont montés sur un chariot déplaçable derrière le mur de retenue et parallèlement à ce dernier, la fraise pénétrant dans l'espace délimité sous le mur, et amenant le produit sur la bande transporteuse. Un tel dispositif présente, cependant, l'inconvénient d'être très volumineux, de nécessiter une mécanique sophistiquée pour tenir compte de la température du produit à extraire et a un effet néfaste sur la granulométrie dudit produit. En outre, du fait de la vitesse de rotation, nécessaire pour l'extraction, et de la rugosité du produit, la fraise s'use très rapidement, ce qui entraine de nombreuses interventions pour son changement et des coûts d'exploitation élevés en conséquence.

Les dispositifs de dégagement par translation comportent un balancier monté sur un pivot solidaire du chariot déplaçable parallèlement au mur de retenue, ledit balancier pouvant pénétrer par l'une de ses deux extrémités dans le fond de la trémie, en fonction du sens de déplacement, en vue de l'extraction du produit. Afin de permettre, lors de l'inversion du sens de marche du chariot, une pénétration de l'extrémité libre du balancier dans le fond de la trémie, il est prévu, en outre, sur l'axe de pivotement du balancier et solidaire à ce dernier, un doigt s'aggripant dans le produit lors de ladite inversion du sens de marche du chariot.

Un tel dispositif ne permet, toutefois, pas de reprendre l'extraction du produit au point où elle a été arrêtée, avant l'inversion du sens de marche, l'extraction s'effectuant en marche et de façon progressive. Il en résulte donc une perte de zone d'extraction relativement longue au niveau de chaque inversion.

On connaît également, par FR-A-1 263 181, un dispositif d'extraction longitudinale pour trémies en longueur ou en file, notamment pour trémies de cockeries, selon la première partie de la revendication 1 consistant en un chariot, monté de manière déplaçable sur un ensemble de guidage disposé derrière un mur de retenue réglable de la trémie, et en un moyen d'extraction du produit, solidaire dudit chariot et déversant ledit produit sur une bande transporteuse, ledit moyen d'extraction étant constitué par un soc à double pente monté sur l'extrémité du chariot proche du mur de retenue.

Un tel dispositif présente, cependant, l'inconvénient d'une construction particulièrement lourde due notamment à son encombrement important correspondant à la largeur de l'ensemble de guidage.

La présente invention a pour but de pallier ces inconvénients.

Elle a, en effet, pour objet un dispositif d'extraction longitudinale pour trémies en longueur ou en file, en particulier pour trémies de cokeries, essentiellement constitué par un chariot monté de manière déplaçable sur un ensemble de guidage disposé derrière un mur de retenue réglable de la trémie et par un moyen d'extraction du produit solidaire dudit chariot, déversant ledit produit sur une bande transporteuse et constitué sous forme d'un soc à double pente monté sur l'extrémité du chariot proche du mur de retenue, caractérisé en ce que le soc du moyen d'extraction du produit est pourvu d'une pointe pivotante montée à articulation autour d'un axe vertical sur la pointe du soc à double pente.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue en plan du dispositif conforme à l'invention ;
la figure 2 est une vue en coupe suivant A -A de la figure 1, et
la figure 3 est une vue en coupe suivant B - B de la figure 1.

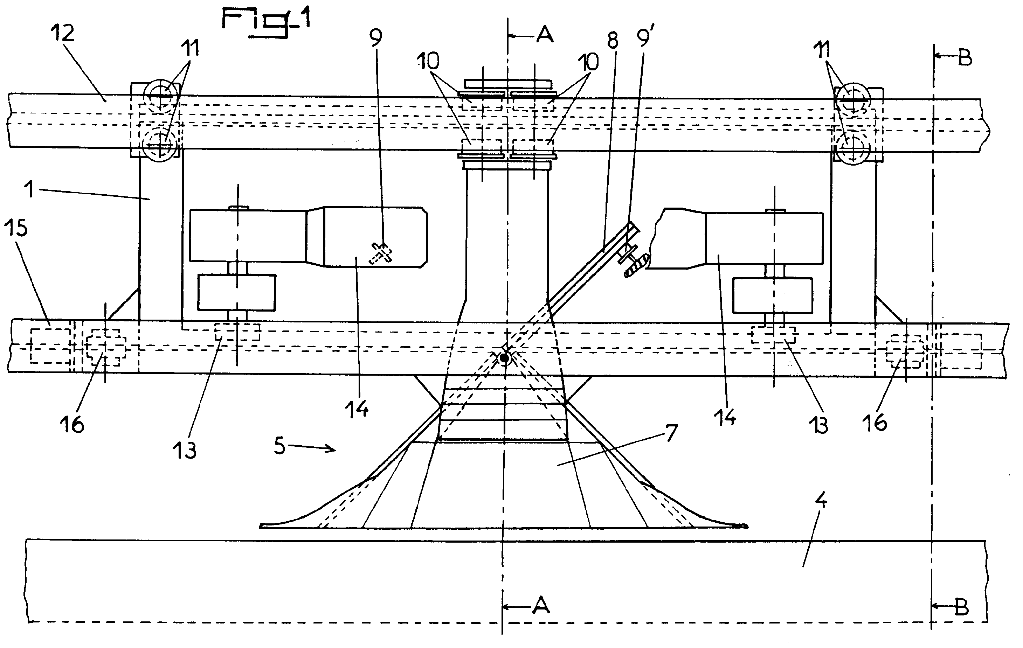

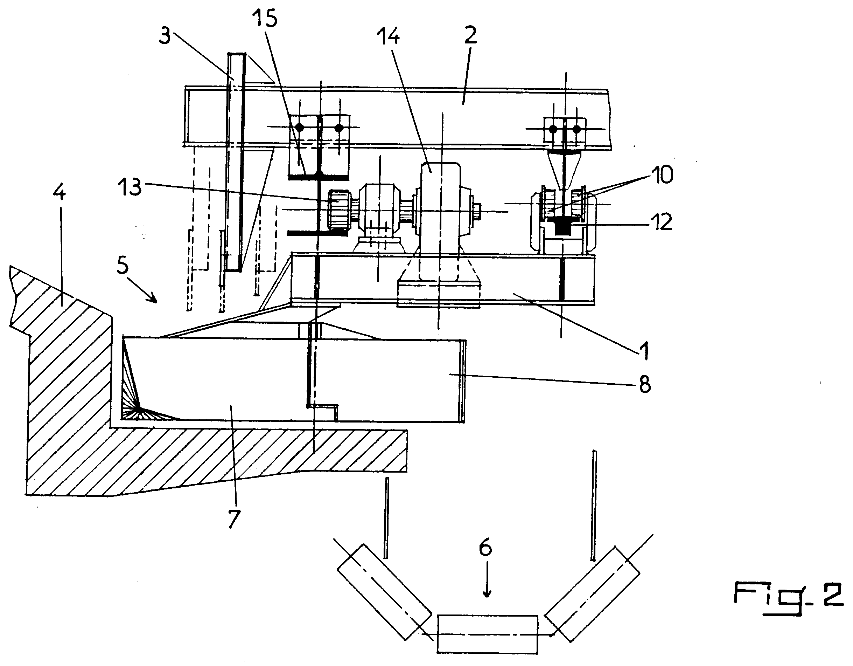

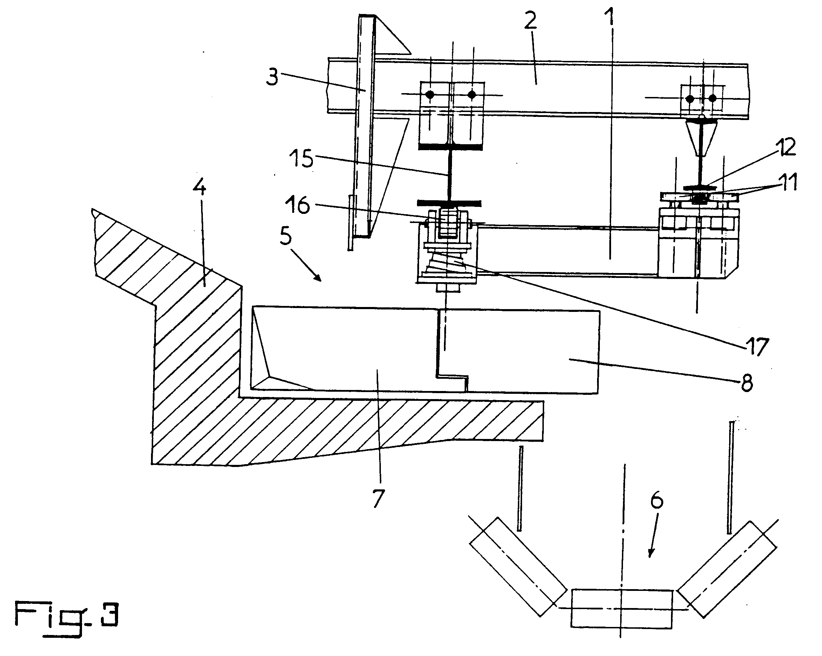

Les figures 1 à 3 des dessins annexés représentent un dispositif d'extraction longitudinale pour trémies en longueur ou en file, en particulier pour trémies de cokeries, qui est essentiellement constitué par un chariot 1 monté de manière déplaçable sur un ensemble de guidage 2 disposé derrière un mur 3 de retenue réglable de la trémie 4 et par un moyen 5 d'extraction du produit solidaire dudit chariot 1 et déversant ledit produit sur une bande transporteuse 6.

Conformément à l'invention, le moyen d'extraction 5 du produit, qui est constitué sous forme d'un soc 7 à double pente, est pourvu d'une pointe pivotante 8 et est monté sur l'extrémité du chariot 1 proche du mur de retenue 3.

La pointe pivotante 8 est montée à articulation autour d'un axe vertical sur la pointe du soc 7 à double pente et s'appuie, dans chaque position de service, contre une butée 9 ou 9' solidaire du chariot 1. Ce montage du moyen d'extraction 5 sur le chariot 1 permet d'avancer le centre de gravité de ce dernier en direction de la trémie 4. En outre, une telle réalisation du moyen 5 sous forme de double soc 7 avec une pointe pivotante 8 permet l'obtention d'un dispositif de conception légère ne nécessitant pas forcément un appui de l'ensemble de guidage 2 dans la trémie, un montage en porte-à-faux de cet ensemble 2 étant suffisant.

Ainsi, il est également possible d'éviter des accumulations de matière au niveau desdits appuis, de telles accumulations ayant pour effet néfaste de freiner le débit.

Comme le montrent les figures 1 à 3, le chariot 1 est monté de manière déplaçable sur l'ensemble de guidage 2 au moyen de galets de support 10 et de galets de guidage 11 s'appuyant respectivement sur et contre un rail 12 de l'ensemble de guidage 2, et l'entraînement dudit chariot 1 est réalisé au moyen d'au moins un galet de friction 13 entraîné par un ensemble motoréducteur 14 et s'appuyant sur un rail 15 de l'ensemble de guidage 2.

Selon une autre caractéristique de l'invention, le chariot 1 est avantageusement muni d'au moins un galet de contre-pression 16 monté sur un ressort 17 à pression réglable et s'appuyant sur le rail 15 de l'ensemble de guidage 2 sur la face opposée à celle d'appui du galet de friction 13.

Dans le mode de réalisation conforme à l'invention et représenté aux dessins annexés, l'entraînement du chariot 1 est avantageusement réalisé au moyen de deux ensembles galet 13 - motoréducteur 14, un galet de contre-pression 16 s'appuyant sur le côté opposé du rail 15 près de chaque galet 13. Ainsi, il est assuré un entraînement parfait, sans glissement, du chariot 1 sur l'ensemble de guidage 2, sans nécessiter d'éléments d'entraînement complexes, notamment à coopération de formes, tels que des ensembles pignon et crémaillère.

Le dispositif conforme à l'invention permet de réaliser facilement, avec utilisation d'une construction légère et d'un faible prix de revient, une extraction efficace de produits en vrac, en particulier de coke.

En outre, ce dispositif ne nécessite pas de disposer d'une zone d'inversion non exploitable, généralement aux deux extrémités d'un quai, de sorte que l'ensemble de la construction peut être réduit.

Enfin, le dispositif conforme à l'invention permet une grande fiabilité de fonctionnement, le nombre de pièces mécaniques en contact avec le produit à extraire étant réduit au minimum.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif d'extraction longitudinale pour trémies en longueur ou en file, en particulier pour trémies de cokeries, essentiellement constitué par un chariot (1) monté de manière déplaçable sur un ensemble de guidage (2) disposé derrière un mur (3) de retenue réglable de la trémie (4) et par un moyen (5) d'extraction du produit solidaire dudit chariot (1), déversant ledit produit sur une bande transporteuse (6) et constitué sous forme d'un soc (7) à double pente monté sur l'extrémité du chariot (1) proche du mur de retenue (3), caractérisé en ce que le soc (7) du moyen (5) d'extraction du produit est pourvu d'une pointe pivotante (8) montée à articulation autour d'un axe vertical sur la pointe du soc (7) à double pente.

2. Dispositif, suivant la revendication 1, caractérisé en ce que la pointe pivotante (8) s'appuie, dans chaque position de service, contre une butée (9 ou 9') solidaire du chariot (1).

3. Dispositif, suivant la revendication 1, caractérisé en ce que le chariot (1) est avantageusement muni d'au moins un galet de contre-pression (16) monté sur un ressort (17) à pression réglable et s'appuyant sur un rail (15) de l'ensemble de guidage (2) sur la face opposée à celle d'appui d'un galet de friction (13).

## Patentansprüche

1. Längsausbringvorrichtung für Längs- und Reihenbunker, insbesondere für Kokereibunker, im wesentlichen bestehend aus einem Wagen (1), der verfahrbar auf einer Führungseinheit (2) an einer verstellbaren Stauwand (3) des Bunkers (4) angebracht ist, und aus einem mit dem besagten Wagen (1) fest verbundenen Mittel (5) zum Ausbringen des Materials, welches Mittel das besagte Material auf ein Förderband (6) schüttet und von einer Pflugschar (7) mit doppelter Schräge gebildet wird, welche an dem der Stauwand (3) benachbarten Ende des Wagens (1) angebracht ist,
dadurch gekennzeichnet, daß die Pflugschar (7) der Vorrichtung (5) zum Ausbringen des Materials mit einer schwenkbaren Spitze (8) versehen ist, welche um eine vertikale Achse beweglich an der Spitze der Pflugschar (7) mit doppelter Schräge angelenkt ist.

2. Vorrichtung nach Anspruch 1, dadurch gekennzeichnet, daß sich die schwenkbare Spitze (8) in jeder Betriebsstellung an einem mit dem Wagen (1) fest verbundenen Anschlag (9 bzw. 9') abstützt.

3. Vorrichtung nach Anspruch 1, dadurch gekennzeichnet, daß der Wagen (1) vorzugsweise mit wenigstens einer Gegendruckrolle (16) versehen ist, welche auf einer verstellbaren Druckfeder (17) angebracht ist und sich an einer Schiene (15) der Führungseinheit (2) auf einer der Auflageseite einer Reibrolle (13) gegenüberliegenden Seite abstützt.

## Claims

1. Longitudinal discharging device for lengthwise or lined-up bins, in particular for coking bins, essentially consisting of a carriage (1) displaceably mounted on a guide unit (2) arranged behind an adjustable retaining wall (3) of the bin (4) and of a paeans (5) for discharging the product which is integral with said carriage (1), pours said product onto a conveyor belt (6) and is made up in the form of a ploughshare (7) having a double slope mounted on the end of the carriage (1) close to the retaining wall (3),
characterised in that the ploughshare (7) of the means (5) for discharging the product is provided with a pivoting point (8) mounted so as to articulate round a vertical shaft on the point of the ploughshare (7) having a double slope.

2. Device according to claim 1, characterised in that the pivoting point (8) rests, in each operating position, against a stop (9 or 9') integral with the carriage (1).

3. Device according to claim 1, characterised in that the carriage (1) is advantageously equipped with at least one counter-pressure wheel (16) mounted on a spring (17) of adjustable pressure and resting on a rail (15) of the guide unit (2) on the face remote from the face supporting a friction wheel (13).
